# EUROPEAN PATENT APPLICATION

(11) **EP 4 344 320 A1**
(43) Date of publication of application: **27.03.2024**
(21) Application number: 21940739.2
(22) Date of filing: 18.05.2021
(51) Int. Cl.: H04W 72/04, H04W 28/04

(54) **TERMINAL AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2021/018875
(87) International publication number: WO 2022/244122

(57) **Abstract**

A terminal includes: a reception unit configured to receive single control information and a plurality of downlink channels scheduled by the single control information from a base station; a control unit configured to determine a codebook related to feedback information for the plurality of downlink channels, based on time domain resource allocation information, and to determine the feedback information for the plurality of downlink channels, based on the codebook; and a transmission unit configured to transmit the feedback information for the plurality of downlink channels to the base station. The control unit determines the time domain resource allocation information, based on whether the plurality of downlink channels overlap with an uplink symbol.

## Description

### [FIELD OF THE INVENTION]

The present invention relates to a terminal and a communication method in a wireless communication system.

### [BACKGROUND OF THE INVENTION]

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1). In addition, in NR, using a high frequency band such as 52.6 GHz to 114.25 GHz has been discussed.

Further, the N R system supports the use of frequency bands (also referred to as unlicensed bands, unlicensed carriers, and unlicensed CCs) different from the frequency bands (licensed bands) licensed to telecommunication operators, in order to expand frequency bands.

### [Citation List]

### [Non-Patent Document]

[Non-Patent Document 1] 3GPP TS 38.300 V16.4.0 (2020-12)
[Non-Patent Document 2] 3GPP TS 38.331 V16.3.0 (2020-12)
[Non-Patent Document 3] 3GPP TS 38.213 V16.4.0 (2020-12)
[Non-Patent Document 4] 3GPP TS 38.321 V16.3.0 (2020-12)
[Non-Patent Document 5] 3GPP TS 38.214 V16.4.0 (2020-12)

### SUMMARY OF THE INVENTION

### [TECHNICAL PROBLEM]

When the slot length becomes shorter in accordance with the use of high frequency bands, it is assumed that the base station schedules a plurality of PDSCHs for a terminal using single control information (DCI).

However, according to the conventional techniques described in non-patent documents 1 to 5, or the like, in a case of scheduling a plurality of PDSCHs by using a single DCI, there is no specification that specifies how to generate feedback information (specifically, HARQ-ACK information), and thus, there is a possibility that the feedback information cannot be transmitted appropriately according to the conventional techniques.

The present invention has been made in view of the above, and it is an object of the present invention to provide a technique that enables appropriate transmission of feedback information in a case of scheduling a plurality of PDSCHs by using single control information.

### [SOLUTION TO PROBLEM]

According to the disclosed technique, a terminal is provided. The terminal includes: a reception unit configured to receive single control information and a plurality of downlink channels scheduled by the single control information from a base station; a control unit configured to determine a codebook related to feedback information for the plurality of downlink channels, based on time domain resource allocation information, and to determine the feedback information for the plurality of downlink channels, based on the codebook; and a transmission unit configured to transmit the feedback information for the plurality of downlink channels to the base station. The control unit determines the time domain resource allocation information, based on whether the plurality of downlink channels overlap with an uplink symbol.

### [ADVANTAGEOUS EFFECTS OF INVENTION]

According to the disclosed technique, a technique is provided that enables appropriate transmission of feedback information in a case of scheduling a plurality of PDSCHs by using single control information.

### BRIEF DESCRIPTION OF THE DRAWINGS

[Fig. 1] Fig. 1 is a drawing illustrating a wireless communication system in an embodiment of the present invention.
[Fig. 2] Fig. 2 is a drawing illustrating a wireless communication system according to an embodiment of the present invention.
[Fig. 3] Fig. 3 is a drawing illustrating an example of a band.
[Fig. 4] Fig. 4 is a drawing illustrating relationship between SCSs and symbol lengths.
[Fig. 5] Fig. 5 is a drawing illustrating an example of a basic procedure in an embodiment of the present invention.
[Fig. 6] Fig. 6 is a drawing illustrating a method of determining a PDSCH slot window.
[Fig. 7] Fig. 7 is a drawing illustrating a method of determining a PDSCH slot window.
[Fig. 8] Fig. 8 is a drawing illustrating a method of determining candidate reception occasions in each slot.
[Fig. 9] Fig. 9 a drawing illustrating an example of a HARQ-ACK codebook.
[Fig. 10] Fig. 10 is a drawing illustrating scheduling of a plurality of PDSCHs using one DCI.
[Fig. 11] Fig. 11 is a drawing illustrating an example of a functional structure of a base station 10 in an embodiment of the present invention.
[Fig. 12] Fig. 12 is a drawing illustrating an example of a functional structure of a terminal 20 in an embodiment of the present invention.
[Fig. 13] Fig. 13 is a drawing illustrating an example of a hardware structure of the base station 10 or the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. A conventional technique is a conventional NR. A wireless communication system (a base station 10 and a terminal 20) in an embodiment of the present invention basically performs an operation in accordance with the conventional specifications (for example: non-patent documents 1 to 5). Note that, in order to solve the problem to be solved in a case where the use of high frequency band is assumed, the base station 10 and the terminal 20 may perform an operation that is not defined in the conventional definition. In the following descriptions of the embodiments, an operation that is not defined in the conventional definition is mainly described. Note that the values described in the following descriptions are examples.

Furthermore, in an embodiment of the present invention, the duplex scheme may be TDD (Time Division Duplex) scheme, FDD (Frequency Division Duplex) scheme, or other schemes (e.g., Flexible Duplex, or the like).

Further, in an embodiment of the present invention, the expression, a radio (wireless) parameter is "configured" may mean that a predetermined value is preconfigured, or may mean that a radio parameter indicated by the base station 10 or the terminal 20 is configured.

### (System configuration)

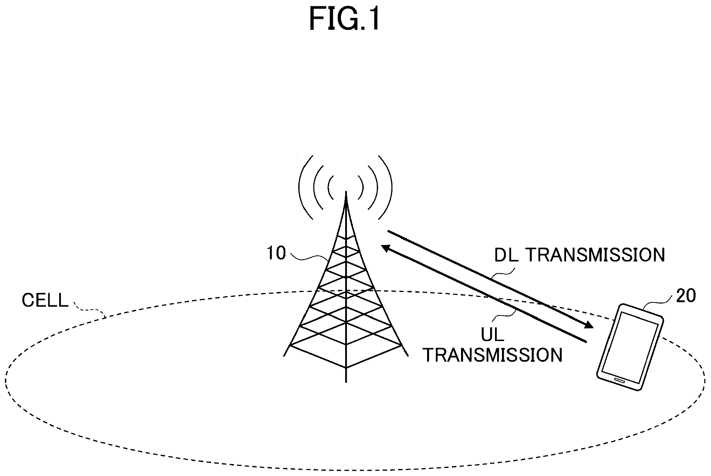

Fig. 1 is a drawing illustrating a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communications with the terminal 20. A physical resource of a wireless signal is defined in the time domain and the frequency domain.

OFDM may be used as a wireless access method. In the frequency domain, with respect to the subcarrier spacing (SCS), at least 15 kHz, 30 kHz, 120 kHz, and 240 kHz may be supported. In addition, a resource block may include a predetermined number of (e.g., 12) consecutive sub-carriers regardless of the SCS.

When performing the initial access, the terminal 20 detects an SSB (SS/PBCH block), and identifies an SCS of PDCCH and PDSCH, based on PBCH included in the SSB.

In addition, in the time domain, a plurality of OFDM symbols (for example, as many as 14, regardless of the subcarrier spacing) are included in a slot. Hereinafter, an OFDM symbol is referred to as a "symbol". The slot is a unit of scheduling. In addition, a subframe with a 1 ms section period is defined, and a frame including 10 subframes is defined. Note that the number of symbols per slot is not limited to 14.

As shown in Fig. 1, the base station 10 transmits control information or data in DL (Downlink) to the terminal 20 and receives control information or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, both the base station 10 and the terminal 20 may perform communications via an SCell (Secondary Cell) and a PCell (Primary Cell) using CA (Carrier Aggregation).

The terminal 20 may be a communication apparatus that includes a wireless communication function, such as a smart-phone, a mobile phone, a tablet, a wearable terminal, a communication module for M2M (Machine-to-Machine), or the like. As shown in Fig. 1, the terminal 20 uses various communication services provided by the wireless communication system by receiving control information or data in DL from the base station 10 and transmitting control information or data in UL to the base station 10.

The terminal 20 can perform carrier aggregation to communicate with the base station 10 by bundling a plurality of cells (a plurality of CCs (component carriers)). One PCell (primary cell) and one or more SCells (secondary cells) are used in the carrier aggregation. In addition, PUCCH-SCell having PUCCH may be used.

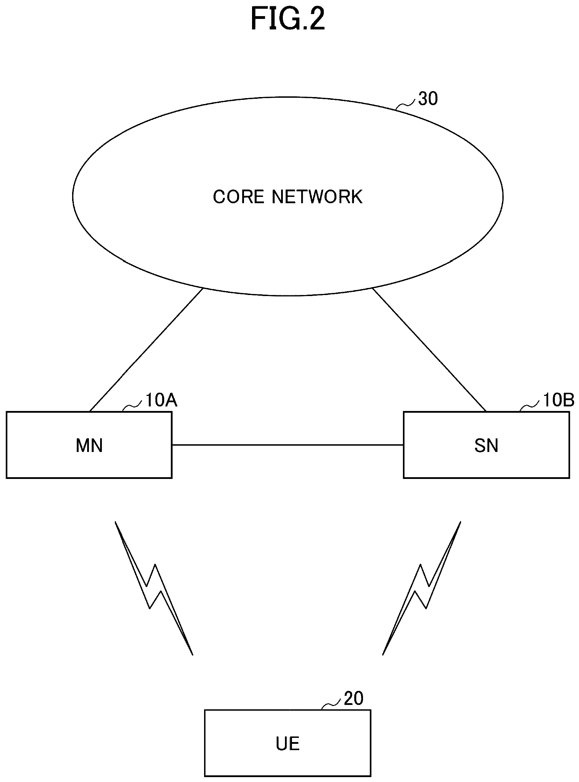

Fig. 2 shows an example of a configuration of a wireless communication system in a case where NR-DC (NR-Dual connectivity) is performed. As shown in Fig. 2, a base station 10A serving as an MN (Master Node) and a base station 10B serving as an SN (Secondary Node) are provided. The base station 10A and the base station 10B are each connected to a core network. The terminal 20 communicates with both the base station 10A and the base station 10B.

A cell group provided by the base station 10A serving as an MN is called an MCG (Master Cell Group), and a cell group provided by the base station 10B serving as an SN is called an SCG (Secondary Cell Group). In addition, in DC, the MCG is composed of one PCell and one or more SCells, and the SCG is composed of one PSCell (Primary SCell) and one or more SCells. Note herein that a CC (component carrier) and a cell may be used interchangeably. In addition, PCell and PSCell may be referred to as SPCell.

In a wireless communication system according to an embodiment of the present invention, in a case where an unlicensed band is used, LBT (Listen Before Talk) may be executed. The base station 10 or the terminal 20 performs signal sensing, and performs transmission in a case where the sending result is idle, and does not perform transmission in a case where the sensing result is busy. Note that, in an unlicensed band, LBT is not necessarily always performed, and there may be a case in which LBT is not performed in an unlicensed band.

### (Regarding frequency band)

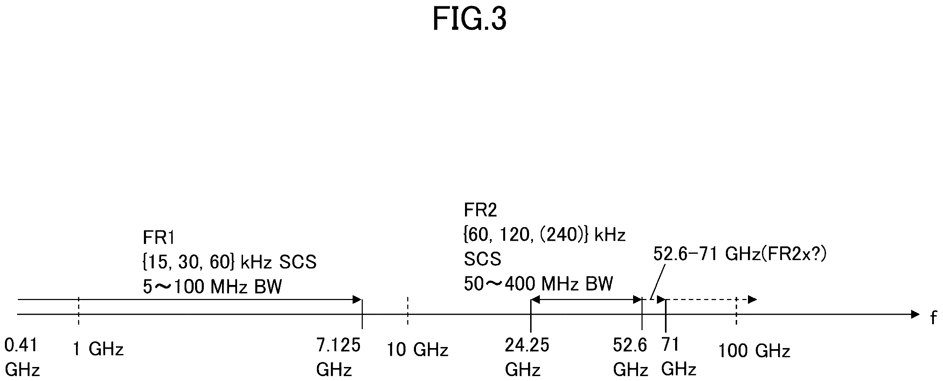

FIG. 3 illustrates an example of a frequency band used in conventional NR and a frequency band used in a wireless communication system according to an embodiment of the present invention. There are two frequency bands (also referred to as frequency ranges) for conventional NR, FR1 (0.41 GHz to 7.125) and FR2 (24.25 GHz to 52.6 GHz). As shown in Fig. 3, FR1 supports 15 kHz, 30 kHz, and 60 kHz as SCS and supports 5-100 MHz as bandwidth (BW). FR2 supports 60 kHz, 120 kHz and 240 kHz (SSB only) as SCS and supports 50-400 MHz as bandwidth (BW).

In the wireless communication system according to an embodiment of the present invention, it is assumed that a frequency band higher than 52.6 GHz (e.g., 52.6 GHz to 114.25 GHz) which is not utilized in the conventional NR will be also utilized. This frequency band may be referred to as FR4, for example.

Also, in this embodiment, it is assumed that a wider SCS than conventional SCSs is used in accordance with the expansion of the frequency band as described above. For example, an SCS of 480 kHz or greater than 480 kHz may be used as an SCS of SSB and PDCCH/PDSCH.

In the high frequency band, it is assumed that a large number of narrow beams will be used to compensate for large propagation losses. In addition, an SCS that is wider than SCS of the current FR2 (e.g., 480 kHz, 960 kHz) may be used as the SCS.

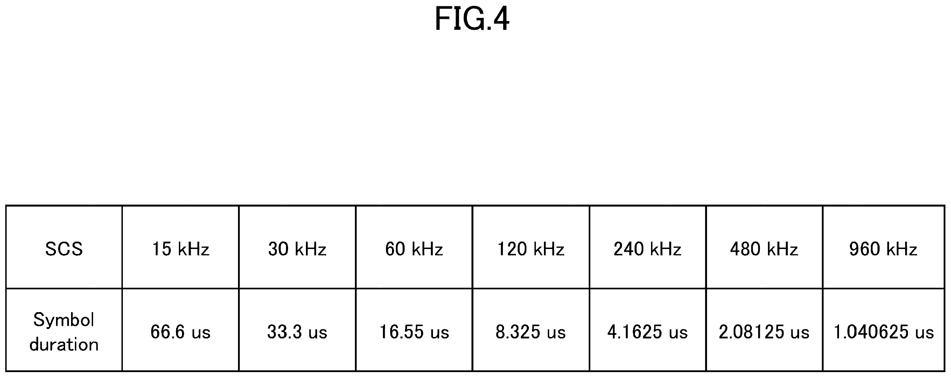

FIG. 4 is a drawing illustrating relationships between SCSs and symbol lengths (symbol durations). As shown in Fig. 4, the symbol length (symbol duration) becomes shorter as the SCS becomes wider. In addition, if it is assumed that the number of symbols per slot is constant (i.e., 14 symbols), the slot length becomes shorter as the SCS becomes wider.

In the wireless communication system, the terminal 20 transmits, as feedback, HARQ-ACK information in which HARQ-ACK information bit values are set to the HARQ-ACK CodeBook (HARQ-ACK CB) to the base station 10 in response to the data reception via PDSCH from the base station 10. Note that transmission/reception of data via PDSCH may be referred to as transmission/reception of PDSCH.

However, as described above, when the slot length becomes shorter because of the use of high frequency bands, it is assumed that a plurality of PDSCHs are to be scheduled by single DCI scheduling, and, based on such an assumption, how to generate the HARQ-ACK CB is not clearly defined in the conventional technique.

Hereinafter, an embodiment of the present invention will be described regarding the generation of the HARQ-ACK CB and the transmission of the HARQ-ACK information in a case where a plurality of PDSCHs are scheduled by single DCI scheduling.

### (Basic operation)

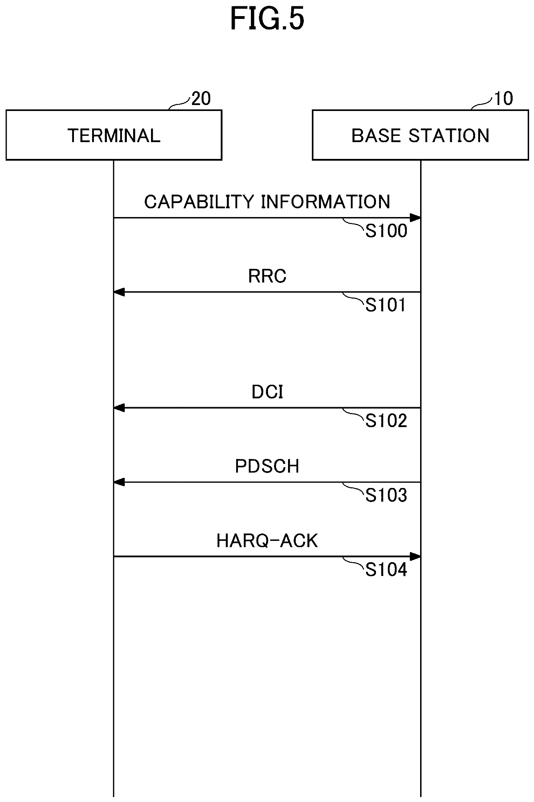

First, an example of a basic operation in a wireless communication system according to an embodiment of the present invention will be described with reference to Fig. 5.

In S100, the terminal 20 transmits capability information (UE capability) to the base station 10. The base station 10 can determine, for example, the content of the information to be transmitted to the terminal 20 in the following S101 and S102 based on the capability information.

In S101, the base station 10 transmits configuration information to the terminal 20 via an RRC message, and the terminal 20 receives the configuration information. The configuration information is, for example, configuration information related to a K1 set and a TDRA table as described below. Both the K1 set and the TDRA table may be indicated from the base station 10 to the terminal 20, or may be predetermined by technical specifications or the like, and the base station 10 and the terminal 20 may use the predetermined K1 set and TDRA table. In addition, the TDRA table may be referred to as time domain resource assignment configuration information.

In S102, the base station 10 transmits, to the terminal 20, scheduling (allocation information) for a plurality of PDSCHs via a DCI, and the terminal 20 receives the DCI. In addition, the DCI contains information related to uplink resources for transmitting HARQ-ACK information.

In S103, the terminal 20 receives the PDSCHs based on the scheduling information in the DCI and transmits the HARQ-ACK information to the base station 10 in S104. The base station 10 receives the HARQ-ACK information.

### (Regarding Type 1 HARQ-ACK CB generation)

In an embodiment of the present invention, the target is Type 1 HARQ-ACK CB. Therefore, first, a method of generating the Type 1 HARQ-ACK CB in R16 (Release 16) will be described (non-patent document 3, or the like). In the following descriptions, a case of using PUCCH as a channel for transmitting HARQ-ACK information will be described. However, the channel for transmitting HARQ-ACK information may be PUSCH.

First, there are step A and step B shown below as an overall flow. The following flow may be the same for an embodiment 1 and an embodiment 2 of the present invention.

In step A, the terminal 20 determines HARQ-ACK occasions that indicate possible PDSCH receptions. The bit index in the HARQ-ACK occasions indicates each PDSCH reception occasion. The HARQ-ACK occasions may be referred to as a HARQ-ACK codebook.

In step B, the terminal 20 determines O^{ACK} HARQ-ACK information bit values in the HARQ-ACK occasions determined in step A. For example, if data is received normally in a given reception occasion, the corresponding bit indicates ACK.

Then, the terminal 20 transmits, to the base station 10, the HARQ-ACK information in which the HARQ-ACK information bit value is configured at the bit position of each reception occasion.

More specifically, the step A includes the following step A-1 and step A-2.

### <Step A-1>

The terminal 20 determines a PDSCH slot window, based on the configured K1 set.

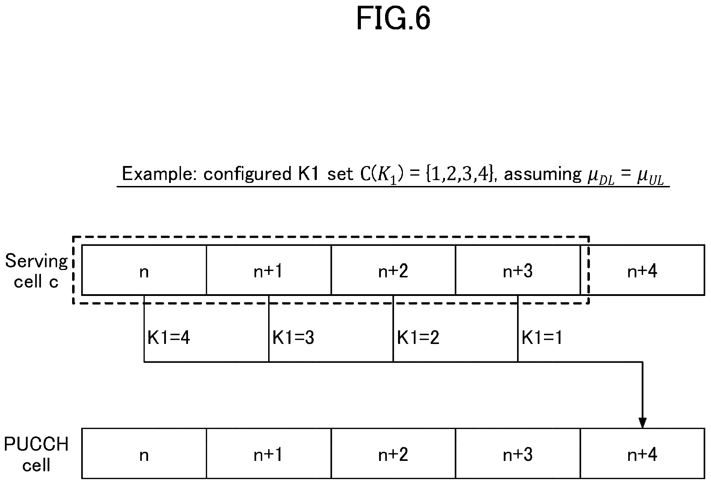

Fig. 6 illustrates an example of a PDSCH slot window in a case in which the K1 set C(K₁)={1, 2, 3, 4} and the numerologies are the same between uplink and downlink (µ_{DL}=µ_{UL}).

In Fig. 6, an upper portion indicates a serving cell c for receiving PDSCH and a lower portion indicates a PUCCH cell. The same applies to the subsequent drawings.

K1 indicates a distance (number of slots) between a slot in which PDSCH is received and a slot for transmitting PUCCH in a case of viewing from the PUCCH cell. In other words, K1 is a parameter value indicating the feedback transmission timing. In a case of Fig. 6, PUCCH is transmitted in a slot n+4 of the PUCCH cell, and thus, slots n to n+3 of the serving cell c are determined as the PDSCH slot window (slot time window for possible PDSCH reception).

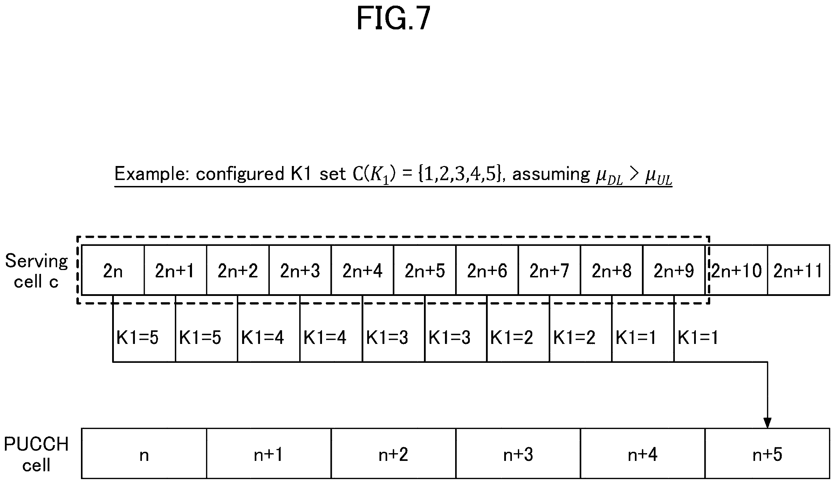

Fig. 7 illustrates an example of a PDSCH slot window in a case in which the K1 set C(K₁)={1, 2, 3, 4, 5} and µ_{DL}>µ_{UL}. In a case of Fig. 7, PUCCH is transmitted in a slot n+5 of the PUCCH cell, and thus, slots 2n to 2n+9 of the serving cell c are determined as the PDSCH slot window (slot time window for possible PDSCH reception). For example, a slot 2n of the serving cell corresponds to a time position of a slot n of the PUCCH cell, and thus, using the slot length in the PUCCH cell as a reference, a slot n+5 that is 5 slots (K1=5) after the slot n is a slot for transmitting PUCCH.

### <Step A-2>

In step A-2, the terminal 20 determines candidate PDSCH reception occasions of each slot in the window determined in step A-2. Specifically, the following procedure of S1 to S3 are performed.

In S1, the candidate PDSCH reception occasions are associated with a set R (set of rows) of TDRA (Time Domain Resource Allocation) table.

In S2, a portion of allocation information (SLIV) in the TDRA table is excluded from the allocation information (SLIV) in the TDRA table, the portion being overlapped with a portion in which UL is configured according to TDD-UL-DL-ConfigurationCommon and TDD-UL-DL-ConfigDedicated.

In S3, with respect to the candidate PDSCH reception occasions overlapping in the time domain, the candidate PDSCH reception occasions are determined according to a predefined rule.

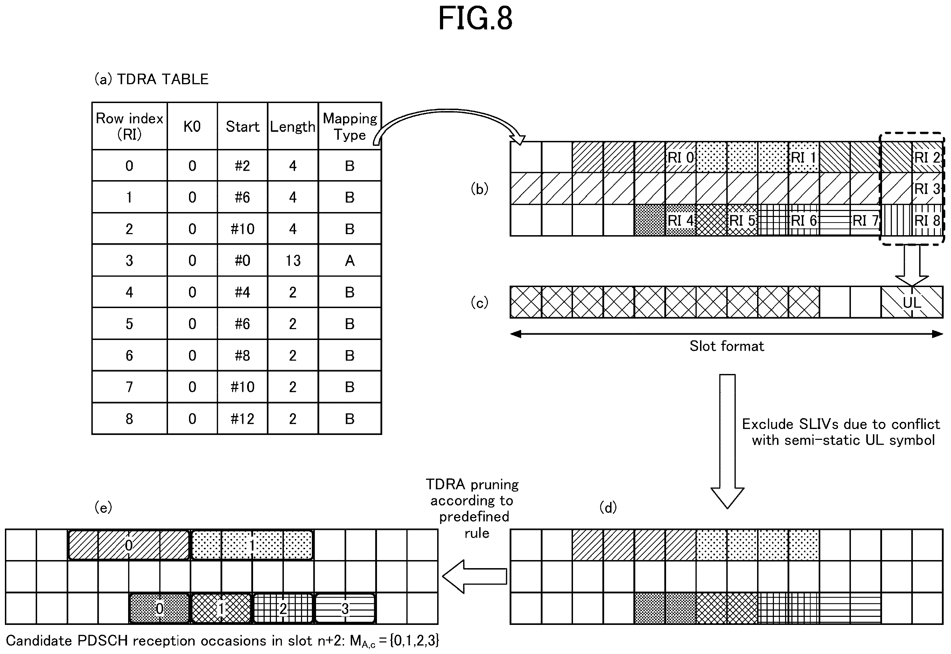

With reference to Fig. 8, an example of determining the candidate PDSCH reception occasions in a slot n will be described. In (a) TDRA table in Fig. 8, one row corresponds to one SLIV (allocation information: indicating a start symbol and a symbol length in a slot), there are nine (9) types, and each type is identified by the row index (RI). Note that the RI is specified by DCI, and that the terminal 20 recognizes the specified SLIV as the actual PDSCH reception occasion. In addition, K1 is also specified by DCI.

In (b) in Fig. 8, SLIVs of all RIs defined in the TDRA table are indicated in a slot. For the sake of illustration convenience, 3 slots are illustrated, which indicates that there are nine (9) types of SLIV candidates in one slot.

Here, as illustrated in (c), RI2, RI3, and RI8 overlap with a UL symbol, and thus, RI2, RI3, and RI8 are excluded from the candidate PDSCH reception occasions.

The SLIVs from which RI2, RI3, and RI8 are excluded are RI0, RI1, and RI4 to RI7. As illustrated in (d) and (e), RI0 overlaps with RI4, and RI1 overlaps with RI5 and RI6. According to a predetermined rule: RI0 and RI4 become a single occasion as a candidate PDSCH reception occasion to which an index 0 is allocated; RI1 and RI5 become a single occasion as a candidate PDSCH reception occasion to which an index 1 is allocated. As a result, the candidate PDSCH reception occasions in the slot (M_{A,C}) become {0, 1, 2, 3}.

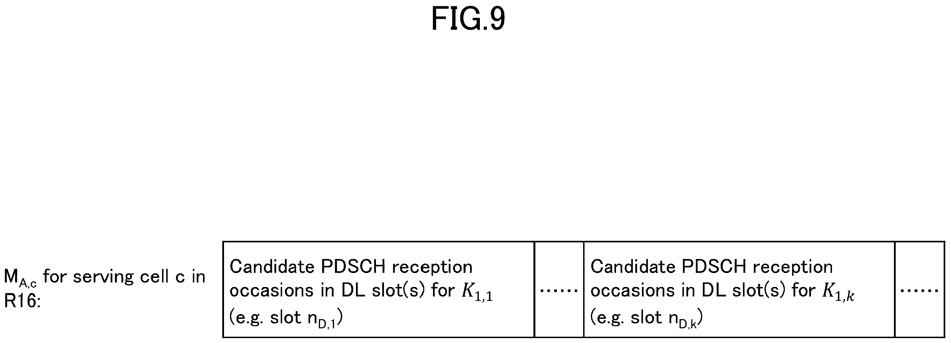

By performing the above-described processing for each slot, as illustrated in Fig. 9, M_{A,C} including candidate PDSCH reception occasions for each slot in the PDSCH slot window is generated.

### (Multi-PDSCH/PUSCH scheduling)

In an embodiment of the present invention, multi-PDSCH/PUSCH scheduling for scheduling a plurality of PDSCHs (or a plurality of PUSCHs) using one DCI scheduling is supported. Hereinafter, the multi-PDSCH scheduling will be described.

The TDRA table used in the multi-PDSCH scheduling is, for example, a table in which one or more SLIVs are included in each row. In addition, the plurality of PDSCHs that are scheduled by one DCI may be contiguous or need not be contiguous in the time domain.

More specifically, the TDRA table is expanded to indicate up to eight PDSCHs in each row. Each PDSCH has a different SLIV and mapping type. The number of PDSCHs that are scheduled by one DCI is implicitly indicated by the number of valid SLIVs in a row in the TDRA table indicated by the DCI.

### (HARQ-ACK in multi-PDSCH scheduling)

In an embodiment of the present invention, the terminal 20 is enabled to transmit the HARQ-ACK feedback for a plurality of PDSCHs scheduled by the multi-PDSCH scheduling by the same PUCCH transmission.

In other words, the HARQ-ACK information for the plurality of PDSCHs scheduled by a single DCI scheduling a plurality of PDSCHs is multiplexed to a single PUCCH in a slot that is determined based on K1.

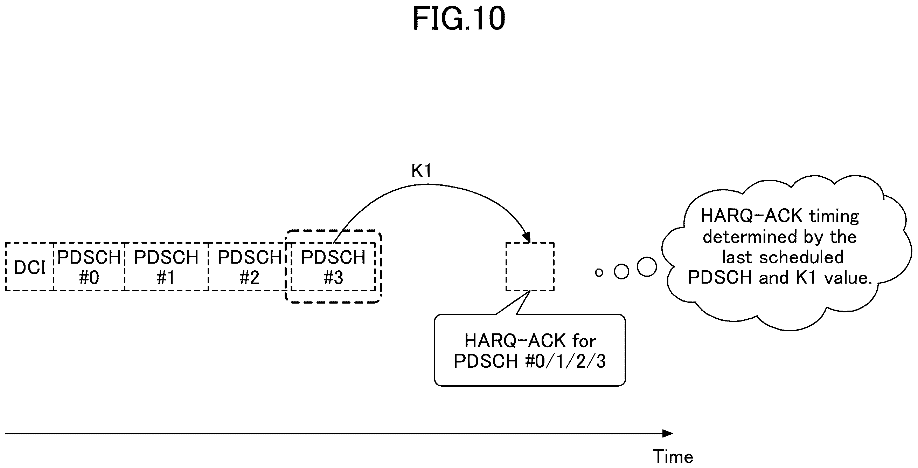

Here, as illustrated in Fig. 10, K1 is a slot offset between the last PDSCH slot scheduled by the DCI and a slot that carries HARQ-ACK information for the scheduled plurality of PDSCHs.

Note that K1 is a value indicated by the PDSCH-to-HARQ_feedback timing indicator field in the DCI. In a case where the PDSCH-to-HARQ_feedback timing indicator field is not present in the DCI, K1 is a value provided by dl-DataToUL-ACK.

In addition, in an embodiment of the present invention, there are options 1, 1a, and 2 below with respect to the generation of a Type 1 HARQ-ACK codebook corresponding to the DCI scheduling a plurality of PDSCHs.

### Option 1:

The terminal 20 determines the candidate PDSCH reception occasions, based on each SLIV in each row in the TDRA table and on extension of K1 set.

### Option 1a:

The terminal 20 determines the candidate PDSCH reception occasions, based on each SLIV in each row in the TDRA table.

### Option 2:

The terminal 20 determines the candidate PDSCH reception occasions, based on the last SLIV in each row in the TDRA table.

### (PDSCH/PUSCH dynamic scheduling limitation)

In a case where PDSCH/PUSCH repeated transmission is not applied in the PDSCH and PUSCH dynamic grant (Dynamic Grant) in the conventional technique, the PDSCH is not assumed to overlap with a semi-static or dynamic UL symbol, and the PUSCH is not assumed to overlap with a semi-static or dynamic DL symbol. Note that "PDSCH/PUSCH" means "PDSCH and/or PUSCH".

In addition, in a case where slot-based repeated transmission is supported for PDSCU/PUSCH, with respect to the PDSCH/PUSCH repeated transmission according to the dynamic grant in multiple slots: in a case where a slot in which the PDSCH is located overlaps with a semi-static UL symbol, the PDSCH is not required to be transmitted; and in a case where a slot in which the PUSCH is located overlaps with a semi-static DL symbol, the PUSCH is not required to be transmitted.

In addition, in a case where mini-slot-based repeated transmission is supported for PUSCH, the segmentation is performed according to a semi-static DL symbol and an invalid symbol. The repeated transmission that overlaps with the semi-static DL symbol and the invalid symbol is not transmitted.

Here, it is necessary to consider TDRA limitation according to the TDD-DL/UL collision. For example, when TDRA exclusion occurs due to the TDD-DL/UL collision, there is an impact on the generation of the Type 1 HARQ-ACK codebook.

In addition, it is necessary to determine the number of transport blocks to be supported at the time of multi-PDSCH scheduling. The number of transport blocks is related to the number of HARQ-ACK bits corresponding to one candidate PDSCH reception occasion and related to the number of HARQ-ACK bits of the Type 1 HARQ-ACK codebook.

Accordingly, the TDD-DL/UL collision limitation is discussed with respect to the multi-PDSCH/PUSCH scheduling. For example, how to limit TDRA by considering the TDD-DL/UL collision is discussed. In addition, the impact of TDRA limitation with respect to the PDSCH reception occasion candidates for the Type 1 HARQ-ACK codebook generation is discussed.

In addition, the maximum number of transport blocks to be supported in the multi-PDSCH scheduling is discussed. For example, how to determine the maximum number of transport blocks to be supported in the multi-PDSCH scheduling is discussed. In addition, the impact of the maximum number of transport blocks on the number of Type 1 HARQ-ACK codebook bits is discussed.

Note that any one the above-described steps or operations may be used for the HARQ-ACK codebook generation described below.

### (Embodiment)

### (Proposal 1)

Hereinafter, the TDRA scheduling limitation for multi-PDSCH/multi-PUSCH scheduling will be described.

### (Option 1)

The terminal 20 is not required to assume that PDSCH overlaps with a semi-static and/or dynamic UL symbol in the multi-PDSCH scheduling, and is not required to assume that PUSCH overlaps with a semi-static and/or dynamic DL symbol in the multi-PUSCH scheduling. In other words, the limitation may be the same as the limitation of the conventional PDSCH/PUSCH dynamic scheduling without repeated transmission.

### (Option 2)

PDSCH may overlap with a semi-static and/or dynamic UL symbol in the multi-PDSCH scheduling, and PUSCH may overlap with a semi-static and/or dynamic DL symbol in the multi-PUSCH scheduling. The terminal 20 is not required to receive PDSCH that overlaps with a semi-static and/or dynamic UL symbol, and PUSCH that overlaps with a semi-static and/or dynamic DL symbol is not required to be received. By allowing the overlap, more rows can be used in the TDRA when scheduling multi-PDSCH/PUSCH by one DCI.

### (Option 2-1)

Any PDSCH may overlap with a semi-static and/or dynamic UL symbol in the multi-PDSCH scheduling, and any PUSCH may overlap with a semi-static and/or dynamic DL symbol in the multi-PUSCH scheduling.

### (Option 2-2)

It is not required to be assumed that all PDSCHs overlap with a semi-static and/or dynamic UL symbol in the multi-PDSCH scheduling, and that all PUSCHs overlap with a semi-static and/or dynamic DL symbol in the multi-PUSCH scheduling. In other words, at least one PDSCH/PUSCH may be received or transmitted.

### (Option 2-3)

It is not required to be assumed that the first, the last and the second to the last PDSCHs overlap with a semi-static and/or dynamic UL symbol in the multi-PDSCH scheduling, and it is not required to be assumed that the first, the last PUSCH and the second to the last PUSCH overlap with a semi-static and/or dynamic DL symbol in the multi-PUSCH scheduling.

### (Option 2-4)

It is not required to be assumed that a predetermined PDSCH overlaps with a semi-static and/or dynamic UL symbol in the multi-PDSCH scheduling, and that a predetermined PUSCH overlaps with a semi-static and/or dynamic DL symbol in the multi-PUSCH scheduling. The predetermined PDSCH/the predetermined PUSCH may be specified by a configured index, or may be specified by a predefined index. For example, it is not required to be assumed that the first, the second, and the third PDSCHs/PUSCHs overlap with a semi-static and/or dynamic UL/DL symbol.

### (Proposal 2)

Hereinafter, the impact of deleting a TDRA row for the Type 1 HARQ-ACK codebook according to the TDRA scheduling limitation in the multi-PDSCH/multi-PUSCH scheduling will be described.

With respect to the Type 1 HARQ-ACK codebook generation, whether and how a TDRA row is excluded greatly depend on the TDRA scheduling limitation. Hereinafter, the terminal 20 may operate as described in 1) to 5) below. Note that an operation described in 1) to 5) may be applied to any Type 1 HARQ-ACK codebook generation.

1) TDRA scheduling limitation: The terminal 20 is not required to assume that PDSCH overlaps with a semi-static and/or dynamic UL symbol in the multi-PDSCH scheduling, and is not required to assume that PUSCH overlaps with a semi-static and/or dynamic DL symbol in the multi-PUSCH scheduling.
   Operation related to TDRA row exclusion based on the TDD-DL/UL collision: SLIV that is included in the TDRA row and that collides with a semi-static and/or dynamic UL/DL symbol may be excluded.
2) TDRA scheduling limitation: Any PDSCH may overlap with a semi-static and/or dynamic UL symbol in the multi-PDSCH scheduling, and any PUSCH may overlap with a semi-static and/or dynamic DL symbol in the multi-PUSCH scheduling.
   Operation related to TDRA row exclusion based on the TDD-DL/UL collision: SLIV that is included in the TDRA row and that collides with a semi-static and/or dynamic UL/DL symbol is not required to be excluded.
3) TDRA scheduling limitation: The terminal 20 is not required to assume that all PDSCHs overlap with a semi-static and/or dynamic UL symbol in the multi-PDSCH scheduling, and is not required to assume that all PUSCHs overlap with a semi-static and/or dynamic DL symbol in the multi-PUSCH scheduling.
   Operation related to TDRA row exclusion based on the TDD-DL/UL collision: SLIVs that are included in the TDRA row and that collide with a semi-static and/or dynamic UL/DL symbol may be all excluded.
4) TDRA scheduling limitation: The terminal 20 is not required to assume that the first, the last PDSCH and the second to the last PDSCH overlap with a semi-static and/or dynamic UL symbol in the multi-PDSCH scheduling, and that the first, the last PUSCH and the second to the last PUSCH overlap with a semi-static and/or dynamic DL symbol in the multi-PUSCH scheduling.
   Operation related to TDRA row exclusion based on the TDD-DL/UL collision: SLIV that is included in the TDRA row, that collides with a semi-static and/or dynamic UL/DL symbol, and that corresponds to the first, the last PDSCH/PUSCH or the second to the last PDSCH/PUSCH may be excluded.
5) TDRA scheduling limitation: The terminal 20 is not required to assume that a predetermined PDSCH overlaps with a semi-static and/or dynamic UL symbol in the multi-PDSCH scheduling, and is not required to assume that a predetermined PUSCH overlaps with a semi-static and/or dynamic DL symbol in the multi-PUSCH scheduling. Operation related to TDRA row exclusion based on the TDD-DL/UL collision: SLIV that is included in the TDRA row, that collides with a semi-static and/or dynamic UL/DL symbol, and that corresponds to the predetermined PDSCH/PUSCH may be excluded.

Note that, in the above-described 2), after performing the TDRA row exclusion, the PDSCH/PUSCH slot window may be determined.

### (Proposal 3)

Hereinafter, the transport block scheduling limitation will be described. Note that, hereinafter, PDSCH may be replaced with PUSCH.

### (Case A)

In the multi-PDSCH scheduling by one DCI, the maximum number of transport blocks that can be scheduled for one PDSCH may be 2. The number of transport blocks that can be scheduled for one PDSCH may be determined according to the following Alt 1 or Alt 2.

Alt 1) The same maximum number of transport blocks that can be scheduled by one PDSCH may be configured for the single PDSCH scheduling and for the multi-PDSCH scheduling. For example, with respect to the maximum number of transport blocks that can be scheduled for one PDSCH, the RRC parameter "maxNrofCodeWordsScheduledByDCI" that is referred to at the time of the single PDSCH scheduling may be reused.

Alt 2) The maximum number of transport blocks that can be scheduled for one PDSCH may be independently configured for the single PDSCH scheduling and for the multi-PDSCH scheduling. For example, the maximum number of transport blocks that can be scheduled for one PDSCH at the time of multi-PDSCH scheduling may be configured by a new RRC parameter "maxNrofCodeWordsMultiplePdschsScheduledByDCI-R17". The maximum number of transport blocks that can be scheduled for one PDSCH at the time of multi-PDSCH scheduling may be the same as, may be less than, or may be greater than, the maximum number of transport blocks that can be scheduled for one PDSCH at the time of single PDSCH scheduling.

### (Case B)

In the multi-PDSCH scheduling by one DCI, the supported number of transport blocks that can be scheduled for one PDSCH may be only one (1).

### (Proposal 4)

Hereinafter, the impact of the limitation related to the number of transport blocks onto the number of HARQ-ACK bits corresponding to one PDSCH candidate reception occasion will be described. Note that, hereinafter, PDSCH may be replaced with PUSCH.

### (Case 1)

In a case where HARQ-ACK information of each PDSCH is mapped to a PDSCH candidate reception occasion corresponding to SLIV of the PDSCH, the terminal 20 may perform an operation described in Option 1 or Option 2.

### (Option 1)

The number of HARQ-ACK bits may be the same for all PDSCH candidate reception occasions. For example, the number of HARQ-ACK bits may be determined based on one of the maximum number of transport blocks supported by the single PDSCH scheduling or the maximum number of transport blocks supported by the multi-PDSCH scheduling, the one being greater than the other.

### (Option 2)

The number of HARQ-ACK bits may be different between different PDSCH candidate reception occasions. Hereinafter, the terminal 20 may perform an operation as described in 1) to 3).

1) In a case where each SLIV corresponding to one PDSCH candidate reception occasion is included only in a TDRA row with a single SLIV, or in a case where each SLIV corresponding to a PDSCH candidate reception occasion is included in a TDRA row with multiple SLIVs and the row with multiple SLIVs is excluded due to the TDD-DL/UL collision, the number of HARQ-ACK bits corresponding to the PDSCH candidate reception occasion may be determined according to the following Alt 1 or Alt 2.
   Alt 1) The maximum number of transport blocks supported in the single PDSCH scheduling.
   Alt 2) One of the maximum number of transport blocks supported by the single PDSCH scheduling or the maximum number of transport blocks supported by the multi-PDSCH scheduling, the one being greater than the other.
2) In a case where each SLIV corresponding to one PDSCH candidate reception occasion is included only in a TDRA row with a single SLIV, the number of HARQ-ACK bits corresponding to the PDSCH candidate reception occasion may be determined according to the following Alt 1 or Alt 2.
   Alt 1) The maximum number of transport blocks supported in the single PDSCH scheduling.
   Alt 2) One of the maximum number of transport blocks supported by the single PDSCH scheduling or the maximum number of transport blocks supported by the multi-PDSCH scheduling, the one being greater than the other.
3) In a case other than the above-described 1) and 2), the number of HARQ-ACK bits corresponding to the PDSCH candidate reception occasion may be determined by one of the maximum number of transport blocks supported by the single PDSCH scheduling or the maximum number of transport blocks supported by the multi-PDSCH scheduling, the one being greater than the other.

### (Case 2)

In a case where HARQ-ACK information of each PDSCH is mapped to one PDSCH candidate reception occasion corresponding to the last SLIV of the PDSCHs, the terminal 20 may perform an operation described in Option 1 or Option 2 below.

### (Option 1)

The number of HARQ-ACK bits may be the same in each of the reserved PDSCH receptions corresponding to all PDSCH candidate reception occasions. For example, the number of HARQ-ACK bits may be determined based on one of the maximum number of transport blocks supported by the single PDSCH scheduling or the maximum number of transport blocks supported by the multi-PDSCH scheduling, the one being greater than the other.

### (Option 2)

The number of HARQ-ACK bits may be different in the reserved PDSCH receptions corresponding different PDSCH candidate reception occasions. Hereinafter, the terminal 20 may perform an operation as described in 1) to 3).

2) In a case where the number of reserved PDSCH receptions corresponding to a PDSCH candidate reception occasion is one (1), the number of HARQ-ACK bits of the reserved PDSCH reception corresponding to the PDSCH candidate reception occasion may be determined according to the following Alt or Alt 2.
   Alt 1) The maximum number of transport blocks supported in the single PDSCH scheduling.
   Alt 2) One of the maximum number of transport blocks supported by the single PDSCH scheduling or the maximum number of transport blocks supported by the multi-PDSCH scheduling, the one being greater than the other.
2) In a case where the number of reserved PDSCH receptions corresponding to the PDSCH candidate reception occasion exceeds one (1) and where each SLIV corresponding to the PDSCH candidate reception occasion is included only in a TDRA row with multiple SLIVs and is not included in a row with a single SLIV, the number of HARQ-ACK bits of the reserved PDSCH reception corresponding to the PDSCH candidate reception occasion may be determined according to the following Alt 1 or Alt 2.
   Alt 1) The maximum number of transport blocks supported in the single PDSCH scheduling.
   Alt 2) One of the maximum number of transport blocks supported by the single PDSCH scheduling or the maximum number of transport blocks supported by the multi-PDSCH scheduling, the one being greater than the other.
3) In a case other than the above-described 1) and 2), the number of HARQ-ACK bits corresponding to the PDSCH candidate reception occasion may be determined by one of the maximum number of transport blocks supported by the single PDSCH scheduling or the maximum number of transport blocks supported by the multi-PDSCH scheduling, the one being greater than the other.

Note that the number of reserved PDSCHs corresponding to one PDSCH candidate reception occasion may be determined based on the TDRA table configuration, or may be determined based on the maximum number of PDSCHs scheduled by one DCI.

### <Other examples>

Hereinafter, an example that can be applied to any embodiment will be described.

Which one of multiple Proposals/Options/Alts is to be used may be configured by an upper layer parameter transmitted from the base station 10 to the terminal 20, may be indicated as a terminal capability (UE Capability) from the terminal 20 to the base station 10, may be specified according to the technical specifications, or may be configured by an upper layer parameter and indicated by the terminal 20 as a terminal capability (UE Capability).

Information indicating whether the terminal 20 supports multi-PDSCH scheduling based on single DCI may be defined as a terminal capability (UE Capability).

In addition, information indicating whether the terminal 20 supports joint HARQ-ACK feedback corresponding to the plurality of PDSCHs scheduled by single DCI (function of collectively indicating a plurality of HARQ-ACKs corresponding to a plurality of PDSCHs) may be defined as a terminal capability (UE Capability).

Further, information indicating whether determining candidate PDSCH occasions based on each SLIV of each TDRA row is supported may be defined as a terminal capability (UE Capability).

Further, information indicating whether determining an SLIV set (which is used for determining the candidate PDSCH occasions), based on a span of TDRA row in a PDSCH slot is supported may be defined as a terminal capability (UE Capability).

Further, information indicating whether extension of PDSCH slot window is supported may be defined as a terminal capability (UE Capability). Further, information indicating whether extension of K1 set is supported may be defined as a terminal capability (UE Capability).

Further, information indicating whether mapping multiple PDSCH slots associated with the corresponding DL slot with respect to the K1 value is supported may be defined as a terminal capability (UE Capability).

Further, information indicating whether multi-PDSCH/PUSCH scheduling for scheduling PDSCH/PUSCH that overlaps with a UL/DL symbol is supported may be defined as a terminal capability (UE Capability).

Further, information indicating whether multi-PDSCH/PUSCH scheduling for scheduling at least one PDSCH/PUSCH that does not overlap with a UL/DL symbol is supported may be defined as a terminal capability (UE Capability).

Further, information indicating whether multi-PDSCH/PUSCH scheduling for scheduling PDSCH/PUSCH that overlaps with a UL/DL symbol and that is PDSCH/PUSCH other than the first, the last PDSCH/PUSCH and the second to the last PDSCH/PUSCH is supported may be defined as a terminal capability (UE Capability).

Further, information indicating whether multi-PDSCH/PUSCH scheduling for scheduling PDSCH/PUSCH that overlaps with a UL/DL symbol and that is PDSCH/PUSCH other than a predetermined PDSCH/PUSCH is supported may be defined as a terminal capability (UE Capability).

Further, information indicating whether multi-PDSCH/PUSCH for scheduling up to two transport blocks per PDSCH is supported may be defined as a terminal capability (UE Capability).

The terminal 20 may transmit one or more of the above-described capability information items to the base station 10. Further, the base station 10 may indicate the terminal 20 to perform an operation according to the capability, based on the capability information received from the terminal 20.

According to the technique related to the above-described embodiments, in a case where multiple PDSCHs/PUSCHs are scheduled by one DCI, the terminal 20 can determine the TDRA table by considering an overlap with TDD-UL/DL, can determine the number of HARQ-ACK bits, and can transmit the feedback information to the base station 10.

In other words, a technique is provided that enables appropriate transmission of feedback information in a case of scheduling a plurality of PDSCHs by using single control information.

### (Device configuration)

Next, a functional configuration example of the base station 10 and the terminal 20 for performing the processes and operations described above will be described.

### <Base station 10>

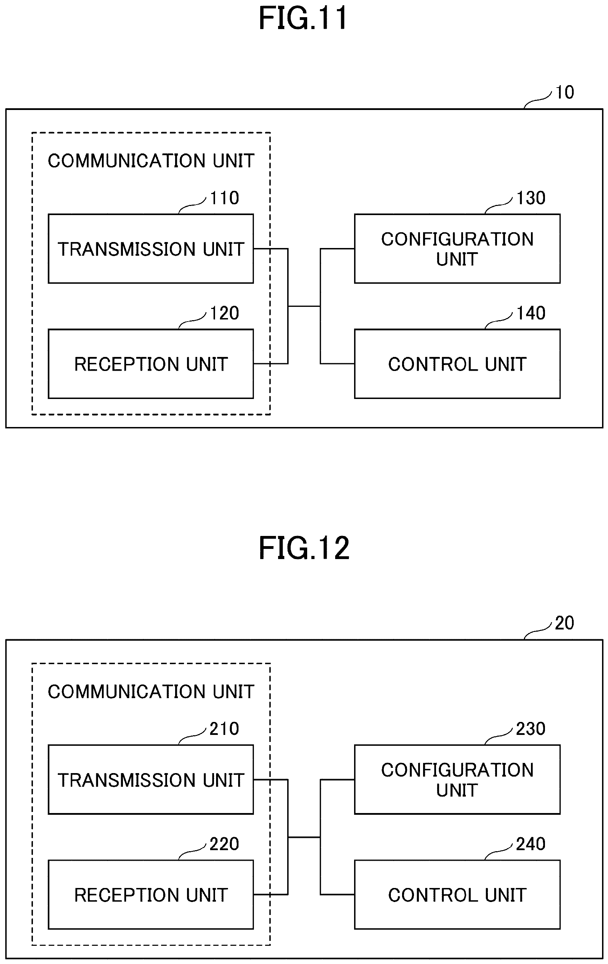

Fig. 11 is a diagram illustrating an example of a functional configuration of the base station 10. As shown in Fig. 11, the base station 10 includes a transmission unit 110, a reception unit 120, a configuration unit 130, and a control unit 140. The functional structure illustrated in Fig. 11 is merely an example. Functional divisions and names of functional units may be anything as long as operations according to an embodiment of the present invention can be performed. Further, the transmission unit 110 and the reception unit 120 may be combined and may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, DCI via PDCCH, data via PDSCH, and the like, to the terminal 20.

The configuration unit 130 stores preset configuration information and various configuration information items to be transmitted to the terminal 20 in a storage device included in the setting unit 130 and reads the preset configuration information from the storage apparatus if necessary.

The control unit 140 performs scheduling of the terminal 20 for DL reception or UL transmission, via the transmission unit 110. In addition, the control unit 140 includes a function of performing LBT. The functional units related to signal transmission in the control unit 140 may be included in the transmission unit 110, and the functional units related to signal reception in the control unit 140 may be included in the reception unit 120. Further, the transmission unit 110 may be referred to as a transmitter, and the reception unit 120 may be referred to as a receiver.

### <Terminal 20>

Fig. 12 is a diagram illustrating an example of a functional configuration of the terminal 20. As shown in FIG. 12, the terminal 20 includes a transmission unit 210, a reception unit 220, a configuration unit 230, and a control unit 240. The functional structure illustrated in Fig. 12 is merely an example. Functional divisions and names of functional units may be anything as long as operations according to an embodiment of the present invention can be performed. the transmission unit 210 and the reception unit 220 may be combined and may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the reception unit 220 has a function of receiving NR-PSS, NR-SSS, NR-PBCH, DL/UL/SL control signals, DCI via PDCCH, data via PDSCH, etc., transmitted from the base station 10. In addition, for example, with respect to the D2D communications, the transmission unit 210 may transmit, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 120 may receive, from the another terminal 20, PSCCH, PSSCH, PSDCH, or PSBCH.

The configuration unit 230 stores various configuration information items received from the base station 10 or the another terminal by the reception unit 220 in the storage device included in the configuration unit 230, and reads them from the storage device as necessary. In addition, the configuration unit 230 also stores preconfigured configuration information. The control unit 240 controls the terminal 20. In addition, the control unit 240 includes a function of performing LBT.

### (Embodiment summary)

As described above, according to an embodiment of the present invention, a terminal is provided. The terminal includes: a reception unit configured to receive single control information and a plurality of downlink channels scheduled by the single control information from a base station; a control unit configured to determine a codebook related to feedback information for the plurality of downlink channels, based on time domain resource allocation information, and to determine the feedback information for the plurality of downlink channels, based on the codebook; and a transmission unit configured to transmit the feedback information for the plurality of downlink channels to the base station. The control unit determines the time domain resource allocation information, based on whether the plurality of downlink channels overlap with an uplink symbol.

According to the above-described configuration, in a case where multiple PDSCHs/PUSCHs are scheduled by one DCI, the terminal 20 can determine the TDRA table by considering an overlap with TDD-UL/DL, can determine the number of HARQ-ACK bits, and can transmit the feedback information to the base station 10. In other words, a technique is provided that enables appropriate transmission of feedback information in a case of scheduling a plurality of PDSCHs by using single control information.

The control unit may exclude an element of the time domain resource allocation information, the element corresponding to a downlink channel that is obtained from among the plurality of downlink channels and that overlaps with an uplink symbol. According to the above-described configuration, in a case where multiple PDSCHs/PUSCHs are scheduled by one DCI, the terminal 20 can determine the TDRA table by considering an overlap with TDD-UL/DL, can determine the number of HARQ-ACK bits, and can transmit the feedback information to the base station 10.

The control unit may exclude elements of the time domain resource allocation information, the elements corresponding to a first downlink channel, a last downlink channel, and a second to the last downlink channel that are obtained from among the plurality of downlink channels and that overlap with an uplink symbol. According to the above-described configuration, in a case where multiple PDSCHs/PUSCHs are scheduled by one DCI, the terminal 20 can determine the TDRA table by considering an overlap with TDD-UL/DL, can determine the number of HARQ-ACK bits, and can transmit the feedback information to the base station 10.

In a case where the control unit maps the feedback information to channel candidates corresponding to values included in elements of the time domain resource allocation information, the control unit may assume a same number of bits of the feedback information between the channel candidates. According to the above-described configuration, in a case where multiple PDSCHs/PUSCHs are scheduled by one DCI, the terminal 20 can determine the TDRA table by considering an overlap with TDD-UL/DL, can determine the number of HARQ-ACK bits, and can transmit the feedback information to the base station 10.

In a case where the control unit maps the feedback information to one or more channels of the channel candidates corresponding to a last value included in elements of the time domain resource allocation information, the control unit may assume a same number of bits of the feedback information between the channel candidates. According to the above-described configuration, in a case where multiple PDSCHs/PUSCHs are scheduled by one DCI, the terminal 20 can determine the TDRA table by considering an overlap with TDD-UL/DL, can determine the number of HARQ-ACK bits, and can transmit the feedback information to the base station 10.

In addition, according to an embodiment of the present invention, a communication method performed by a terminal is provided. The communication method includes: receiving single control information and a plurality of downlink channels scheduled by the single control information from a base station; determining a codebook related to feedback information for the plurality of downlink channels, based on time domain resource allocation information, and determining the feedback information for the plurality of downlink channels, based on the codebook; transmitting the feedback information for the plurality of downlink channels to the base station; and determining the time domain resource allocation information, based on whether the plurality of downlink channels overlap with an uplink symbol.

According to the above-described configuration, in a case where multiple PDSCHs/PUSCHs are scheduled by one DCI, the terminal 20 can determine the TDRA table by considering an overlap with TDD-UL/DL, can determine the number of HARQ-ACK bits, and can transmit the feedback information to the base station 10. In other words, a technique is provided that enables appropriate transmission of feedback information in a case of scheduling a plurality of PDSCHs by using single control information.

### (Hardware structure)

In the above functional structure diagrams used for describing an embodiment of the present invention (Fig. 11 and Fig. 12), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

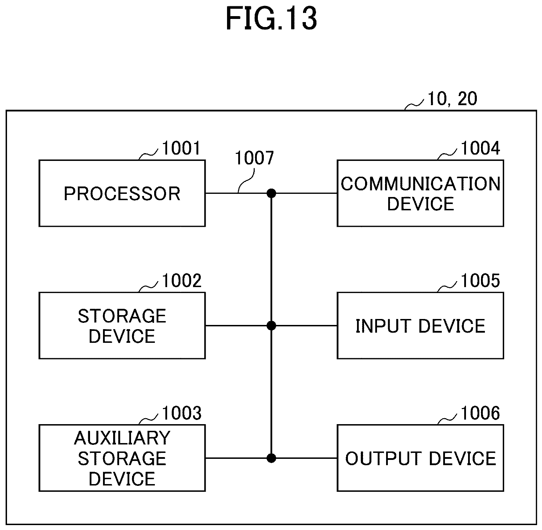

For example, the base station 10, terminal 20, etc., according to an embodiment of the present disclosure may function as a computer for processing the radio communication method of the present disclosure. Fig. 13 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 11 may be realized by control programs that are stored in the storage device 1002 and are executed by the processor 1001. Further, for example, the control unit 240 of the terminal 20 illustrated in Fig. 12 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the terminal. For example, each aspect/embodiment of the present disclosure may be applied to a configuration in which communications between the base station and the terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Similarly, the terminal in the present disclosure may be read as the base station. In this case, the function of the terminal described above may be provided by the base station.

The term "determining" used in the present specification may include various actions or operations. The "determining" may include, for example, a case in which "judging", "calculating", "computing", "processing", "deriving", "investigating", "looking up" (looking up, search, inquiry) (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe. Further, a slot may be referred to as a unit time. The unit time may vary for each cell depending on the numerology.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional T T I ), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, in a case where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Note that, in the present disclosure, TDRA is an example of time domain resource allocation information. The TDRA row is an example of an element of the time domain resource allocation information. SLIV is an example of a value included in an element of the time domain resource allocation information.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a reception unit configured to receive single control information and a plurality of downlink channels scheduled by the single control information from a base station;
a control unit configured to determine a codebook related to feedback information for the plurality of downlink channels, based on time domain resource allocation information, and to determine the feedback information for the plurality of downlink channels, based on the codebook; and
a transmission unit configured to transmit the feedback information for the plurality of downlink channels to the base station, wherein
the control unit determines the time domain resource allocation information, based on whether the plurality of downlink channels overlap with an uplink symbol.

2. The terminal as claimed in claim 1, wherein
the control unit excludes an element of the time domain resource allocation information, the element corresponding to a downlink channel that is obtained from among the plurality of downlink channels and that overlaps with an uplink symbol.

3. The terminal as claimed in claim 1, wherein
the control unit excludes elements of the time domain resource allocation information, the elements corresponding to a first downlink channel, a last downlink channel, and a second to the last downlink channel that are obtained from among the plurality of downlink channels and that overlap with an uplink symbol.

4. The terminal as claimed in claim 1, wherein
in a case where the control unit maps the feedback information to channel candidates corresponding to values included in elements of the time domain resource allocation information, the control unit assumes a same number of bits of the feedback information between the channel candidates.

5. The terminal as claimed in claim 1, wherein
in a case where the control unit maps the feedback information to one or more channels of the channel candidates corresponding to a last value included in elements of the time domain resource allocation information, the control unit assumes a same number of bits of the feedback information between the channel candidates.

6. A communication method performed by a terminal, the communication method comprising:
receiving single control information and a plurality of downlink channels scheduled by the single control information from a base station;
determining a codebook related to feedback information for the plurality of downlink channels, based on time domain resource allocation information, and determining the feedback information for the plurality of downlink channels, based on the codebook;
transmitting the feedback information for the plurality of downlink channels to the base station; and
determining the time domain resource allocation information, based on whether the plurality of downlink channels overlap with an uplink symbol.
